# EUROPEAN PATENT APPLICATION

(11) **EP 4 663 437 A1**
(43) Date of publication of application: **17.12.2025**
(21) Application number: 24181889.7
(22) Date of filing: 13.06.2024
(51) Int. Cl.: B60G 17/017, B62D 53/08, B62D 59/04

(54) **A METHOD AND SYSTEM FOR CONTROLLING DIFFERENT OPERATIONAL MODES OF AN ELECTRICALLY POWERED DOLLY**

(71) Applicant: VOLVO TRUCK CORPORATION, 405 08 Göteborg (SE)
(72) Inventor: OSCARSSON, Christian, 444 47 Stenungsund (SE); HOLMBERG, Mattias, 412 78 Göteborg (SE); HOLMEN, Charlotte, 423 49 Gothenburg (SE)
(74) Representative: Zacco Sweden AB

(57) **Abstract**

A computer-implemented method performed by a system for controlling at least two axles comprising an individually, electronically controlled suspension in different operational modes of an electrically powered dolly comprising a fifth wheel. The method comprises:
- setting the dolly in a towed operational mode if the dolly is connected to a preceding vehicle, or
- setting the dolly in a towing operational mode if the dolly is not connected to a preceding vehicle,
- controlling the height and/or axle-load distribution of each axle by adjusting the suspension of each axle for each operational mode, wherein in the towed operational mode, a fifth wheel height is controlled to a predetermined height above ground and the axle-load distribution is set to a target value, wherein in the towing operational mode, the dolly is controlled to be essentially parallel with the surface on which it is standing.

## Description

### TECHNICAL FIELD

The disclosure relates generally to electrically powered dollys. In particular aspects, the disclosure relates to a method and system for controlling different operational modes of an electrically powered dolly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A semitrailer vehicle normally comprises a tractor arranged to tow a trailer unit via a fifth wheel connection. In order to extend the cargo transport ability of the semitrailer vehicle, a dolly vehicle unit can be added to the vehicle combination, which allows for additional trailer units to be towed by the same tractor. A traditional dolly is an unpowered vehicle unit designed for connection to a tractor unit, truck or prime mover vehicle with strong traction power.

Dolly vehicles comprising on-board energy sources such as electric machines and dolly vehicles with one or more steered axles are becoming increasingly interesting for various applications. Such dolly vehicles can provide additional power to the vehicle combination, thus reducing the traction power requirements imposed on the prime mover vehicle.

Electrified dolly vehicles may also reduce overall fuel consumption by the vehicle combination, since they provide a degree of hybridization to conventional diesel-engine powered tractors. Also, the use of the dolly to autonomously transport a semi-trailer, replacing the tractor, is currently considered.

The dolly needs to behave differently when being connected to a tractor or semi-trailer and when it is autonomously transporting a semi-trailer. There is a need for further development of self-powered dolly vehicles in order to extend the range of applications where self-powered dolly vehicles may be used.

### SUMMARY

According to a first aspect of the disclosure, a computer-implemented method performed by a system for controlling an axle height and/or an axle-load distribution in different operational modes of an electrically powered dolly comprising a fifth wheel and further comprising at least two axles, with each axle comprising an individually, electronically controlled suspension, comprises:
- setting the dolly in a towed operational mode if the dolly is connected to a preceding vehicle, or
- setting the dolly in a towing operational mode if the dolly is not connected to a preceding vehicle,
- controlling the height and/or axle-load distribution of each axle by adjusting the suspension of each axle for each operational mode, wherein in the towed operational mode, the suspension of each axle is controlled such that a fifth wheel height is controlled to a predetermined height above ground and the axle-load distribution is set to a target value, wherein in the towing operational mode, a suspension level of each axle is controlled such that the dolly is essentially parallel with the surface on which it is standing. The first aspect of the disclosure may seek to solve the problem of utilizing an electrically driven dolly to its full extent. A technical benefit may include providing an electrically driven dolly that can work both as a normal dolly with all necessary safety features operational when being connected to a tractor or semi-trailer and as an autonomous vehicle that can transport a semi-trailer without the need of a tractor. As an autonomous vehicle, i.e. when in the towing operational mode, the dolly can control its own brakes as well as the brakes of the semi-trailer.

Optionally in some examples, including in at least one preferred example, setting the dolly in the towed operational mode comprises:
- detecting, by the dolly, that the dolly is physically connected to the preceding vehicle. A technical benefit may include that the dolly will identify that when it is physically connected to a preceding vehicle, such as a tractor or a trailer, the dolly will be set to the towed operational mode.

Optionally in some examples, including in at least one preferred example, setting the dolly in the towing operational mode comprises:
- detecting, by the dolly, that the dolly is parked and is not physically connected to a preceding vehicle. A technical benefit may include that the dolly will be set in the towing operational mode once it is parked and removed from the preceding vehicle, if previously connected to one.

Optionally in some examples, including in at least one preferred example, the method comprises:
- requesting and handshaking of the preceding vehicle with the dolly to prepare the dolly for disconnecting from the preceding vehicle and going into the towing operational mode. A technical benefit may include that the preceding vehicle needs to approve the dolly being disconnected and set to the towing operational mode. In this way, the dolly can be prepared with additional safety functions such as theft preventing functions.

Optionally in some examples, including in at least one preferred example, the method comprises:
- setting the dolly in the towed operational mode if the dolly is connected to a preceding vehicle recognized by the dolly. A technical benefit may include that the dolly is more difficult to steal. If the dolly is connected to a preceding vehicle that it does not recognize, the dolly will not be able to be moved, for instance due that a parking brake may not be released. The recognition of the preceding vehicle uses known techniques.

According to a second aspect of the disclosure, a system for controlling an axle height and/or an axle-load distribution of in different operational modes of an electrically powered dolly comprises a processing circuitry and a memory, the dolly comprising at least two axles with each axle comprising an individually, electronically controlled suspension and a fifth wheel, the processing circuitry being configured to:
- set the dolly in a towed operational mode if the dolly is connected to a preceding vehicle, or
- set the dolly in a towing operational mode if the dolly is not connected to a preceding vehicle,
- control the height and/or axle-load distribution of each axle by adjusting the suspension of each axle for each operational mode, wherein in the towed operational mode, the suspension of each axle is controlled such that a fifth wheel height is controlled to a predetermined height above ground and the axle-load distribution is set to a target value, and wherein in the towing operational mode, a suspension level of each axle is controlled such that the dolly is essentially parallel with the surface on which it is standing. The second aspect of the disclosure may seek to solve the same problem as the method of the first aspect. A technical benefit may include providing a system that enables a dolly to be used both dependently of a preceding vehicle as a regular dolly and as an autonomous dolly that can operate on its own, independently of a preceding vehicle.

Optionally in some examples, including in at least one preferred example, wherein setting the dolly in the towed operational mode, the processing circuitry is configured to:

- detect, by the dolly, that the dolly is physically connected to the preceding vehicle. A technical benefit may include that the dolly will identify that when it is physically connected to a preceding vehicle, such as a tractor or a trailer, the dolly will be set to the towed operational mode.

Optionally in some examples, including in at least one preferred example, wherein setting the dolly in the towing operational mode, the processing circuitry is configured to:
- detect that the dolly is parked and is not physically connected to a preceding vehicle. A technical benefit may include that the dolly will be set in the towing operational mode once it is parked and removed from the preceding vehicle, if previously connected to one.

Optionally in some examples, including in at least one preferred example, the processing circuitry is configured to:
- request and handshake from the preceding vehicle with the dolly to prepare the dolly for disconnecting from the preceding vehicle and going into the towing operational mode. A technical benefit may include that the preceding vehicle needs to approve the dolly being disconnected and set to the towing operational mode. In this way, the dolly can be prepared with additional safety functions such as theft preventing functions. Some examples include locking the parking brake and having a lockable hatch for any connections between the preceding vehicle and the dolly.

Optionally in some examples, including in at least one preferred example, the processing circuitry is configured to:
- set the dolly in the towed operational mode if the dolly is connected to a preceding vehicle recognized by the dolly. A technical benefit may include that the dolly is more difficult to steal. If the dolly is connected to a preceding vehicle that it does not recognize, the dolly will not be able to be moved, for instance due that a parking brake may not be released. The recognition of the preceding vehicle uses known techniques.

According to a third aspect of the disclosure, an electrically powered dolly comprises a system according to the second aspect.

According to a fourth aspect of the disclosure, a computer program product comprises program code for performing, when executed by the processing circuitry, the method of the first aspect.

According to a fifth aspect of the disclosure, a non-transitory computer-readable storage medium comprises instructions, which when executed by the processing circuitry, cause the processing circuitry to perform the method of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** show an exemplary overview of a vehicle combination comprising a tractor with a first trailer connected to the fifth wheel of the tractor and a second trailer connected to the first trailer via a dolly set in a towed operational mode.
**FIG. 2** show an exemplary overview of a vehicle combination comprising a dolly and a first trailer, with the dolly set in a towing operational mode.
**FIG. 3** is a flowchart depicting embodiments of a method for controlling an axle height and/or an axle-load distribution in different operational modes of an electrically powered dolly according to some embodiments.
**FIG. 4** is a schematic block diagram depicting embodiments of a system for controlling an axle height and/or an axle-load distribution of in different operational modes of an electrically powered dolly according to some embodiments.
**FIG. 5** is a schematic diagram of an exemplary computer system for implementing embodiments disclosed herein according to some embodiments.

### DETAILED DESCRIPTION

The detailed description set forth below provides information and examples of the disclosed technology with sufficient detail to enable those skilled in the art to practice the disclosure.

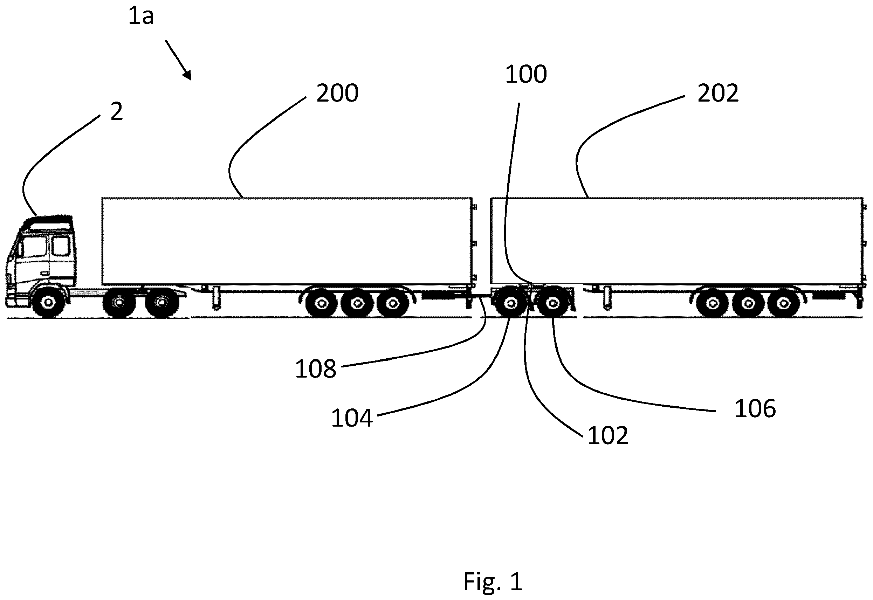

**FIG. 1** show an exemplary overview of a first vehicle combination **1a** comprising a tractor **2** with a first trailer **200** connected to a fifth wheel of the tractor **2** and a second trailer **202** connected to the first trailer **200** via a dolly **100** set in a towed operational mode. The dolly **100** comprises at least two axles **104, 106** with each axle **104, 106** comprising an individually, electronically controlled suspension. The dolly **100** further comprises a fifth wheel **102** to which the second trailer **202** is coupled.

In this configuration, i.e. when the dolly **100** is connected to a preceding vehicle **200** such as a tractor or, as in the example of **FIG. 1****,** a first trailer **200** coupled to a tractor **2,** the dolly **100** is set in the towed operational mode. The dolly **100** is connected to the preceding vehicle **200** by a drawbar **108.**

The dolly comprises a system configured to control the height and/or axle-load distribution of each axle **104, 106** of the dolly **100** by adjusting the suspension of each axle **104, 106.** In the towed operational mode, the dolly is restrained by the drawbar **108** connected to the preceding vehicle **200.** This leads to that the suspension of each axle **104, 106** is controlled such that a fifth wheel height above ground is controlled to a predetermined height and the axle-load distribution is set to a target value. Thus, in the towed operational mode, the system adjusts the fifth wheel to the right height, so that the vehicle combination 1 is aligned. By aligned means that the height of the first trailer **200** and the second trailer **202** are essentially the same. In order to achieve this, the dolly **100** can lean forward or backwards depending on the axle-load of each axle **104, 106.** If there is a desire to increase traction on either of the dolly axles **104, 106,** as an example, the load between can be adjusted such that approximately 40% of the total load is put on one of the axles and approximately 60% of the load is put on the other axle. Other percentage values are also possible within the range of approximately 50 - 60 % of the total load for each axle.

The height of the axles **104, 106** can be set by the dolly itself or by instructions from the preceding vehicle.

The dolly **100** can be set in the towed operational mode by the dolly **100** detecting that the dolly **100** is physically connected to the preceding vehicle **200.** This can be done via sensors in the drawbar **108** that recognizes that the drawbar **108** is attached to a preceding vehicle.

This can further be expanded on by setting the dolly **100** in the towed operational mode only if the dolly **100** recognizes the preceding vehicle **200** that the dolly is connected to. This can be done by known means, for instance by that the preceding vehicle **200** sends an identification signal to the dolly **100,** either through a physical connection to the dolly **100** or wirelessly to the dolly **100.** The dolly **100** may contain a database of approved vehicles and/or may send a query over a communications network to get confirmation that a preceding vehicle **200** is a recognized preceding vehicle. A physical mechanical connection between the dolly **100** and the preceding vehicle **200** is sufficient for the dolly **100** to be put in the towed operational mode. Electric and pneumatic connections are not strictly needed as there are other means to solve this, such as the dolly **100** itself being able to provide its own electrical power and air.

When the dolly **100** is set to the towed operational mode, an emergency brake function on the dolly **100** is applied upon the dolly **100** detecting a loss of dolly brake system capability. This is for instance triggered by a loss of connection between the preceding vehicle **200** and the dolly **100.**

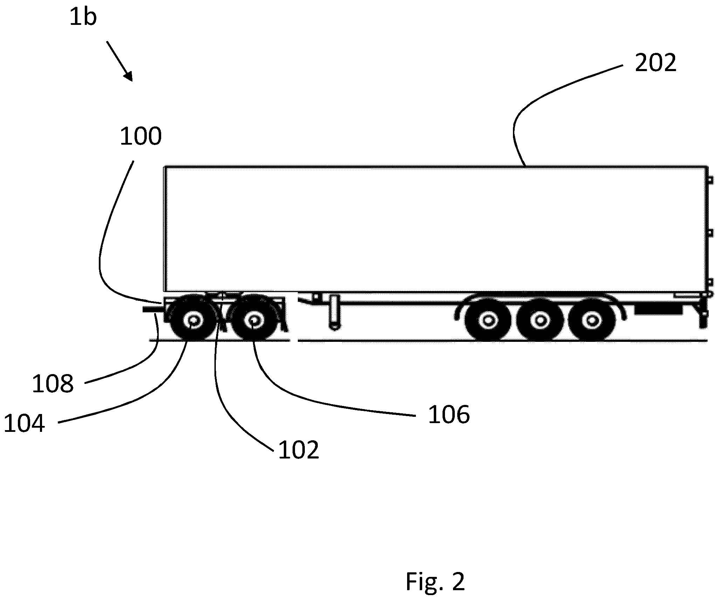

**FIG. 2** show an exemplary overview of a second vehicle combination **1b** comprising a dolly **100** and a first trailer **200,** with the dolly **100** set in a towing operational mode, i.e. working autonomously. As in **FIG. 1****,** the dolly **100** comprises at least two axles **104, 106** with each axle **104, 106** comprising an individually, electronically controlled suspension. The dolly **100** further comprises a fifth wheel **102** to which the first trailer **200** is coupled. In this case, the dolly has recognized that is not connected to a preceding vehicle **200,** and can thereby be set to the towing operational mode. This mode is mainly, but not exclusively intended for use within a confined area, such as a classification yard, warehouse, port and similar.

In the towing operational mode, a suspension level of each axle **104, 106** is controlled such that the dolly **100,** and thereby its fifth wheel **102,** is essentially horizontal, or if the dolly **100** is standing in an incline, parallel with the surface on which the dolly **100** is standing.

In the towing operational mode, the dolly **100** is not restrained by the drawbar **108** being connected to a preceding vehicle **200.** Therefore, in this mode, the suspension levels of each axle **104, 106** are controlled to keep the dolly **100** horizontal or parallel with the surface on which it is standing. The load distribution between the axles **104, 106** may differ from 50% - 50% to obtain the desired level of the dolly **100.**

The dolly **100** may comprise a system comprising a processing circuitry and a memory, for instance implemented in an electronic control unit of the dolly **100.**

As an alternative, the dolly **100** may be part of a communication system (not shown) that may comprise a wireless communications network arranged to enable the dolly **100** to wirelessly communicate with the communication system for setting the dolly **100** in the towed operational mode or in the towing operational mode. Communication is for instance made through a data communications transceiver arrangement connected to an antenna. The dolly **100** and the system may comprise wireless communications enabled devices that allows the dolly and the system to wirelessly communicate with each other via the wireless communications network, for instance, via one or more access points and/or radio base stations (not shown) of the wireless communications network.

The system may be implemented by one or more centrally located and/or distributed network units, such as, e.g. online data processing server(s). Optionally, the system may also form part of a cloud service in the wireless communications network, e.g. the Internet. Hence, the processing described herein as performed by the system may be partly implemented in a cloud service and/or in an electronic control unit (ECU) of the dolly **100.**

The dolly **100** will be adapted for national law and regulations such as lighting, what markings and signage is required etc.

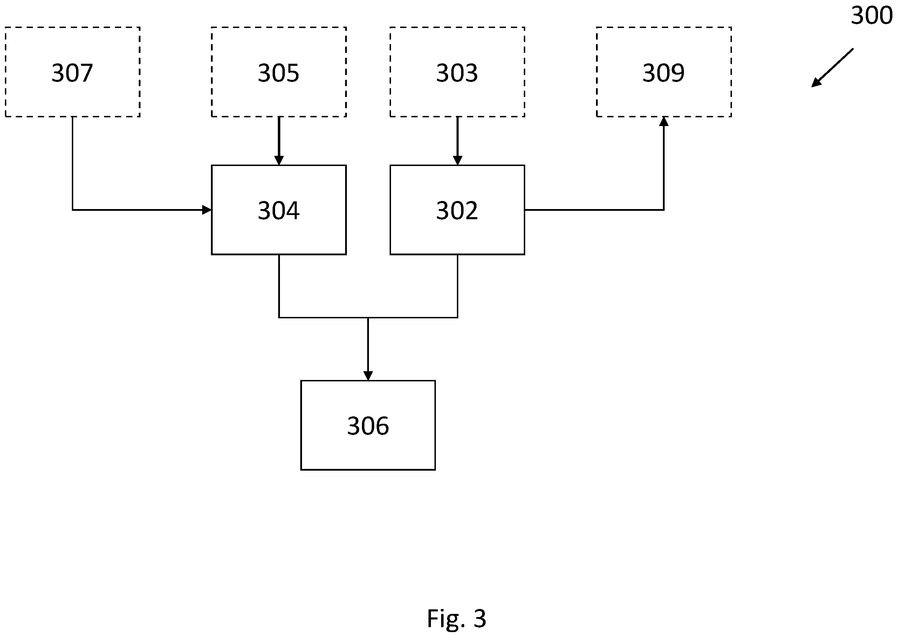

**FIG. 3** is a flowchart depicting embodiments of a method for controlling an axle height and/or an axle-load distribution in different operational modes of an electrically powered dolly according to some embodiments. Embodiments of a computer-implemented method **300** performed by a system for controlling an axle height and/or an axle-load distribution in different operational modes of an electrically powered dolly **100** comprising a fifth wheel **102** and further comprising at least two axles **104, 106,** with each axle **104, 106** comprising an individually, electronically controlled suspension, will now be described with reference to the flowchart depicted in **FIG. 3. FIG. 3** is an illustrated example of actions, steps or operations which may be performed by the system described above with reference to **FIG. 1** and **FIG. 2****.** The method **300** may comprise the following actions, steps or operations.

Action **302:** The dolly **100** is set in a towed operational mode if the dolly **100** is connected to a preceding vehicle **200.**

As an alternative to Action **302,** Action **304:** The dolly **100** is set in the towing operational mode if the dolly **100** is not connected to a preceding vehicle **200.**

Action **306:** The height and/or axle-load distribution of each axle **104, 106** is controlled by adjusting the suspension of each axle **104, 106** for each operational mode.

In the towed operational mode, the suspension of each axle **104, 106** is controlled such that a fifth wheel height is controlled to a predetermined height above ground and the axle-load distribution is set to a target value.

In the towing operational mode, a suspension level of each axle **104, 106** is controlled such that the dolly **100,** and thereby its fifth wheel **102,** is essentially horizontal or parallel with the surface on which it is standing.

In addition to the above actions, the system may optionally according to an example comprise Action **303** complementing Action **302** such that before setting the dolly **100** in the towed operational mode: The dolly **100** detects that the dolly **100** is physically connected to the preceding vehicle **200.**

In addition to the above actions, the system may optionally according to an example comprise Action **305** complementing Action **304** such that before setting the dolly **100** in the towing operational mode: The dolly **100** detects that the dolly **100** is parked and is not physically connected to a preceding vehicle **200.**

In addition to the above actions, the system may optionally according to an example comprise Action **307** complementing Action **304** such that before setting the dolly **100** in the towing operational mode: The dolly **100** requests and handshakes the preceding vehicle **200** to prepare the dolly **100** for disconnecting from the preceding vehicle **200** and going into the towing operational mode.

In addition to the above actions, the system may optionally according to an example comprise Action **309** complementing Action **302** such that before setting the dolly **100** in the towed operational mode: identifying that the preceding vehicle **200** the dolly **100** is connected to is a preceding vehicle **200** recognized by the dolly **100.**

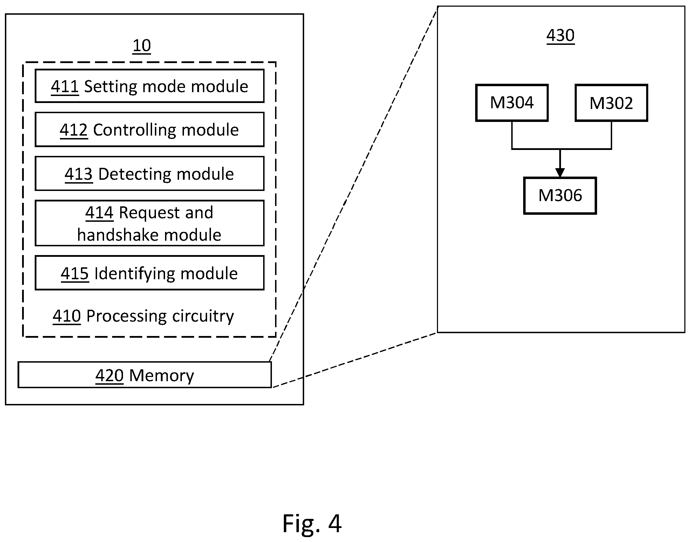

**FIG. 4** is a schematic block diagram depicting embodiments of a system for controlling an axle height and/or an axle-load distribution of in different operational modes of an electrically powered dolly according to some embodiments.

The embodiments of the system described herein may be considered as independent examples, or may be considered in any combination with each other to describe non-limiting examples. It should also be noted that, although not shown in **FIG. 4****,** it should be noted that known conventional features of a system, such as, for example, a connection to the mains, network connections (e.g. input/output ports, etc.), etc., may be assumed to be comprised in the system but is not shown or described any further in regards to **FIG. 4****.** The system may comprise one or more centrally located or distributed network unit(s), wherein the system and the one or more network unit(s) may comprise processing circuitry **410** and a memory **420.**

It should also be noted that some or all of the functionality described in the examples above as being performed by the system may be provided by the processing circuitry **410** executing instructions stored on a computer-readable medium, such as, the memory **420** shown in **FIG. 4****.** The processing circuitry **410** may also comprise a setting mode module **411,** a controlling module **412,** a detecting module **413,** a request and handshake module **414,** and an identifying module **415,** each responsible for providing its functionality to support the examples described herein.

The memory **420** comprises computer code, that when loaded from memory **420** and executed by the one or more processors or processing circuitry **410,** causes the system to perform the actions, steps or operations of the methods described above.

The system or processing circuitry **410** is configured to, or may comprise the setting mode module **411** configured to set the dolly in the towed operational mode if the dolly is connected to a preceding vehicle, or set the dolly in the towing operational mode if the dolly is not connected to a preceding vehicle. The setting mode module 411 is also configured to set the dolly in the towed operational mode if the dolly is connected to a preceding vehicle recognized by the dolly.

The system or processing circuitry **410** is configured to, or may comprise the controlling module **412** configured to control the height and/or axle-load distribution of each axle by adjusting the suspension of each axle for each operational mode, wherein in the towed operational mode, the suspension of each axle is controlled such that a fifth wheel height is controlled to a predetermined height above ground and the axle-load distribution is set to a target value, and wherein in the towing operational mode, a suspension level of each axle is controlled such that the dolly is essentially horizontal or parallel with the surface on which it is standing.

The system or processing circuitry **410** is configured to, or may comprise the detecting module **413** configured to detect, by the dolly, that the dolly is physically connected to the preceding vehicle, or detect that the dolly is parked and is not physically connected to a preceding vehicle.

The system or processing circuitry **410** is configured to, or may comprise the request and handshake module **414** request and handshake from the preceding vehicle with the dolly to prepare the dolly for disconnecting from the preceding vehicle and going into the towing operational mode.

The system or processing circuitry **410** is configured to, or may comprise the identifying module **415** configured to identify if a preceding vehicle is recognized by the dolly.

The system shall be able to seamlessly switch between the towed and the towing operational mode, when connecting or disconnecting from the preceding vehicle.

The dolly **100** may further comprise a traction function that does not need to be disabled depending on the set mode. When the dolly is set in the towed operational mode, it is possible to have a majority of the load on a driving part of the dolly. When the dolly is in the towing operational mode, it is possible to use the traction function with the brakes. The traction can be changed through a change in load between the axles.

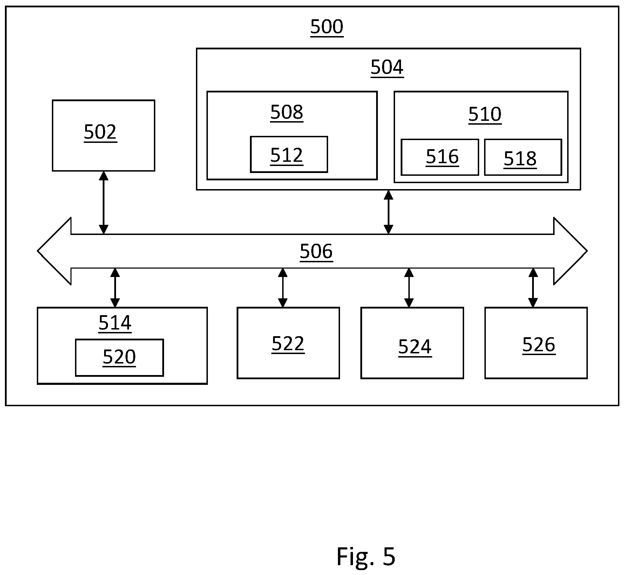

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer-implemented method performed by a system for controlling an axle height and/or an axle-load distribution in different operational modes of an electrically powered dolly comprising a fifth wheel and further comprising at least two axles, with each axle comprising an individually, electronically controlled suspension, the method comprising:
- setting the dolly in a towed operational mode if the dolly is connected to a preceding vehicle, or
- setting the dolly in a towing operational mode if the dolly is not connected to a preceding vehicle,
- controlling the height and/or axle-load distribution of each axle by adjusting the suspension of each axle for each operational mode, wherein in the towed operational mode, the suspension of each axle is controlled such that a fifth wheel height is controlled to a predetermined height above ground and the axle-load distribution is set to a target value, wherein in the towing operational mode, a suspension level of each axle is controlled such that the dolly is essentially horizontal or parallel with the surface on which it is standing.

Example 2: The method according to example 1, wherein setting the dolly in the towed operational mode comprises:
- detecting, by the dolly, that the dolly is physically connected to the preceding vehicle.

Example 3: The method according to example 1 or 2, wherein setting the dolly in the towing operational mode comprises:
- detecting, by the dolly, that the dolly is parked and is not physically connected to a preceding vehicle.

Example 4: The method according to any one of the preceding examples, wherein the method comprises:
- requesting and handshaking of the preceding vehicle with the dolly to prepare the dolly for disconnecting from the preceding vehicle and going into the towing operational mode.

Example 5: The method according to any one of the preceding examples, wherein the method comprises:
- setting the dolly in the towed operational mode if the dolly is connected to a preceding vehicle recognized by the dolly.

Example 6: A system for controlling an axle height and/or an axle-load distribution of in different operational modes of an electrically powered dolly, the system comprising a processing circuitry and a memory, the dolly comprising at least two axles with each axle comprising an individually, electronically controlled suspension and a fifth wheel, the processing circuitry being configured to:
- set the dolly in a towed operational mode if the dolly is connected to a preceding vehicle, or
- set the dolly in a towing operational mode if the dolly is not connected to a preceding vehicle,
- control the height and/or axle-load distribution of each axle by adjusting the suspension of each axle for each operational mode, wherein in the towed operational mode, the suspension of each axle is controlled such that a fifth wheel height is controlled to a predetermined height above ground and the axle-load distribution is set to a target value, and wherein in the towing operational mode, a suspension level of each axle is controlled such that the dolly is essentially horizontal or parallel with the surface on which it is standing.

Example 7: The system according to example 6, wherein setting the dolly in the towed operational mode, the processing circuitry is configured to:
- detect, by the dolly, that the dolly is physically connected to the preceding vehicle.

Example 8: The system according to example 6 or 7, wherein setting the dolly in the towing operational mode, the processing circuitry is configured to:
- detect that the dolly is parked and is not physically connected to a preceding vehicle.

Example 9: The system according to any one of examples 6-8, wherein the processing circuitry is configured to:
- request and handshake from the preceding vehicle with the dolly to prepare the dolly for disconnecting from the preceding vehicle and going into the towing operational mode.

Example 10: The system according to any one of the preceding examples, wherein the processing circuitry is configured to:
- set the dolly in the towed operational mode if the dolly is connected to a preceding vehicle recognized by the dolly.

Example 11: Electrically powered dolly comprising a system according to any one of examples 6-10.

Example 12: A computer program product comprising program code for performing, when executed by the processing circuitry, the method of any of examples 1-5.

Example 13: A non-transitory computer-readable storage medium comprising instructions, which when executed by the processing circuitry, cause the processing circuitry to perform the method of any of examples 1-5.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer-implemented method (300) performed by a system for controlling an axle height and/or an axle-load distribution in different operational modes of an electrically powered dolly (100) comprising a fifth wheel (102) and further comprising at least two axles (104, 106), with each axle (104, 106) comprising an individually, electronically controlled suspension, the method comprising:
- setting (302) the dolly (100) in a towed operational mode if the dolly (100) is connected to a preceding vehicle (200), or
- setting (304) the dolly (100) in a towing operational mode if the dolly (100) is not connected to a preceding vehicle (200),
- controlling (306) the height and/or axle-load distribution of each axle (104, 106) by adjusting the suspension of each axle (104, 106) for each operational mode, wherein in the towed operational mode, the suspension of each axle (104, 106) is controlled such that a fifth wheel height is controlled to a predetermined height above ground and the axle-load distribution is set to a target value,
wherein in the towing operational mode, a suspension level of each axle (104, 106) is controlled such that the dolly (100) is essentially parallel with the surface on which it is standing.

2. The method (300) according to claim 1, wherein setting (302) the dolly (100) in the towed operational mode comprises:
- detecting (303), by the dolly (100), that the dolly (100) is physically connected to the preceding vehicle (200).

3. The method (300) according to claim 1 or 2, wherein setting (304) the dolly (100) in the towing operational mode comprises:
- detecting (305), by the dolly (100), that the dolly (100) is parked and is not physically connected to a preceding vehicle (200).

4. The method (300) according to any one of the preceding claims, wherein the method comprises:
- requesting and handshaking of the preceding vehicle (200) with the dolly (100) to prepare the dolly (100) for disconnecting from the preceding vehicle (200) and going into the towing operational mode.

5. The method (300) according to any one of the preceding claims, wherein the method (300) comprises:
- setting (302) the dolly (100) in the towed operational mode if the dolly (100) is connected to a preceding vehicle (200) recognized by the dolly (100).

6. A system (10) for controlling an axle height and/or an axle-load distribution of in different operational modes of an electrically powered dolly (100), the system (10) comprising a processing circuitry and a memory, the dolly (100) comprising at least two axles (104, 106) with each axle (104, 106) comprising an individually, electronically controlled suspension and a fifth wheel (102), the processing circuitry being configured to:
- set the dolly (100) in a towed operational mode if the dolly (100) is connected to a preceding vehicle (200), or
- set the dolly (100) in a towing operational mode if the dolly (100) is not connected to a preceding vehicle (200),
- control the height and/or axle-load distribution of each axle (104, 106) by adjusting the suspension of each axle (104, 106) for each operational mode, wherein in the towed operational mode, the suspension of each axle (104, 106) is controlled such that a fifth wheel height is controlled to a predetermined height above ground and the axle-load distribution is set to a target value, and wherein in the towing operational mode, a suspension level of each axle (104, 106) is controlled such that the dolly (100) is essentially parallel with the surface on which it is standing.

7. The system (10) according to claim 6, wherein setting the dolly (100) in the towed operational mode, the processing circuitry is configured to:
- detect, by the dolly (100), that the dolly (100) is physically connected to the preceding vehicle (200).

8. The system (10) according to claim 6 or 7, wherein setting the dolly (100) in the towing operational mode, the processing circuitry is configured to:
- detect that the dolly (100) is parked and is not physically connected to a preceding vehicle (200).

9. The system (10) according to any one of claims 6-8, wherein the processing circuitry is configured to:
- request and handshake from the preceding vehicle (200) with the dolly (100) to prepare the dolly (100) for disconnecting from the preceding vehicle (200) and going into the towing operational mode.

10. The system (10) according to any one of the preceding claims, wherein the processing circuitry is configured to:
- set the dolly (100) in the towed operational mode if the dolly (100) is connected to a preceding vehicle (200) recognized by the dolly (100).

11. Electrically powered dolly (100) comprising a system (10) according to any one of claims 6-10.

12. A computer program product comprising program code for performing, when executed by the processing circuitry, the method (300) of any of claims 1-5.

13. A non-transitory computer-readable storage medium comprising instructions, which when executed by the processing circuitry, cause the processing circuitry to perform the method (300) of any of claims 1-5.
